# FASCICULE DE BREVET EUROPEEN

(11) **EP 3 277 640 B1**
(45) Date de publication et mention de la délivrance du brevet: **28.10.2020**
(21) Numéro de dépôt: 16717184.2
(22) Date de dépôt: 30.03.2016
(51) Int. Cl.: C03B 35/20, C03B 23/03, C03B 23/035, C03B 23/025

(54) **DISPOSITIF DE BOMBAGE DE FEUILLES DE VERRE**
VORRICHTUNG ZUM BIEGEN VON GLASSCHEIBEN
APPARATUS FOR BENDING SHEETS OF GLASS

(30) Priorité: 03.04.2015 FR 1552932
(43) Date de publication de la demande: 07.02.2018
(73) Titulaire: SAINT-GOBAIN GLASS FRANCE, 92400 Courbevoie (FR)
(72) Inventeur: BETSCHART, Olivier, 60300 Senlis (FR); LAGNEAUX, Robert, 60350 Attichy (FR); BOUILLÉ, Guénaël, 60150 Longueil Annel (FR)
(74) Mandataire: Saint-Gobain Recherche
(86) Numéro de dépôt international: PCT/FR2016/050711
(87) Numéro de publication internationale: WO 2016/156735

(56) Documents cités:
- EP-A1- 2 412 682
- US-A- 4 830 650
- US-A- 5 401 286
- US-A1- 2004 129 028

## Description

L'invention concerne un dispositif et un procédé dans le domaine du bombage de feuilles de verre par pressage contre une forme supérieure de bombage.

Le WO0206170 enseigne le bombage de feuilles de verre contre une forme pleine supérieure convexe. Les feuilles sont amenées les unes derrières les autres par un lit de rouleaux de convoyage sous une forme pleine supérieure convexe de bombage et un cadre de pressage se soulève pour prendre en charge une feuille et la presser contre la forme supérieure. Le cadre de pressage a une forme complémentaire à celle de la forme pleine de bombage, cette forme correspondant à celle finalement souhaitée pour la feuille. Compte tenu de ce que la feuille arrive plane sous la forme convexe et que le cadre a la forme de bombage finale, le cadre soulève la feuille en ne touchant celle-ci qu'en certains endroits en périphérie, pouvant même se limiter à trois points périphériques. Compte tenu de sa flexibilité et de sa formabilité, puisque la feuille est à sa température de bombage, la feuille n'est d'abord soulevée que dans ces endroits de contact et sa région centrale continue un certain temps d'être en contact avec les rouleaux se trouvant sous la forme de bombage. Ce n'est que lorsque le cadre de pressage est à une certaine hauteur que la région centrale de la feuille perd enfin son contact avec les rouleaux. Ce plus long temps de contact avec les rouleaux au centre de la feuille de verre peut être à l'origine de marques ou de défauts optiques, lesquels sont d'autant plus gênants qu'ils se situent en région centrale du verre.

L'invention remédie au problème susmentionné. Selon l'invention, lorsque la feuille de verre est en position sous la forme supérieure de bombage, elle est d'abord soulevée très rapidement par un support dit « support intermédiaire » présentant de plus faibles courbures que celles finalement souhaitées et données par la forme supérieure, ledit support intermédiaire étant le cas échéant dépourvu de courbures, et ce, afin d'écourter le plus possible le contact de la feuille avec les rouleaux de convoyage. Le verre est ensuite pressé contre la forme supérieure de bombage par un moyen de pressage, lequel agit avec une force pneumatique ou une force mécanique.

Le document EP2412682 enseigne un procédé de bombage contre une forme supérieure comprenant la réception du verre sur un lit de rouleau sous la forme supérieure, puis, la prise en charge du verre sur un support intermédiaire, puis le pressage du verre contre la forme supérieure par un cadre de pressage segmenté dont les segments se referment sous le verre avant le pressage. Le support intermédiaire touche toutes les zones du vitrage, y compris la zone centrale, son rôle étant de soulever suffisamment haut le verre pour pouvoir faire passer les segments du cadre de pressage entre les rouleaux et le verre. Ce cadre intermédiaire prévient tout affaissement du verre en sa zone centrale le temps que le cadre de pressage passe sous le verre. Le support intermédiaire risque de marquer le verre en cette zone centrale, laquelle est la zone généralement la plus importante en utilisation finale.

Les documents US4830650 et US5401286 enseignent le bombage de verre contre une forme supérieure par pressage par une contre-forme inférieure déformable en un matériau flexible, d'abord plane puis prenant la forme de la forme supérieure pendant le pressage grâce à un système de ressorts. Cette contre-forme inférieure ne prend la forme souhaitée pour le verre que si elle est suffisamment appuyée contre le verre par compression des ressorts. C'est donc le verre qui donne sa forme à la contre-forme et non l'inverse. Ce système peut être difficile à régler et le cas échéant nécessiter des pressions importantes.

Le document US2004/129028 enseigne le bombage par paires de vitres, le verre étant prébombé par gravité, puis le verre est transféré depuis un cadre de bombage sur un moule de cintrage par aspiration concave, un appui de la face inférieure de la vitre placée en position inférieure étant réalisé au moins sur le bord périphérique de la face de formage, puis on applique une dépression au verre par le moule de cintrage, puis le verre est transféré du moule de cintrage directement sur un cadre dont le contour est en affleurement à la face de formage du moule de cintrage par aspiration.

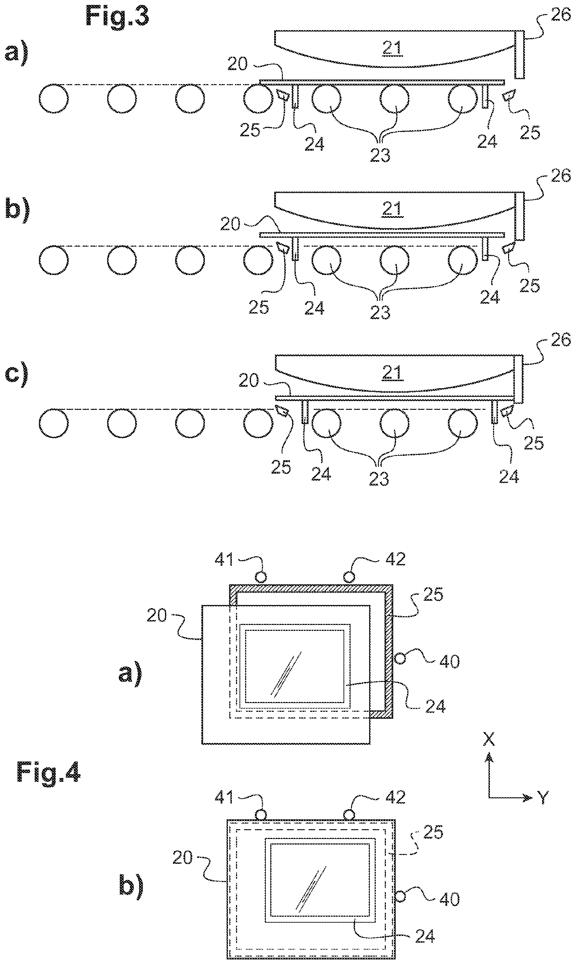

Selon la présente invention, le moyen de pressage de la feuille contre la forme supérieure est un moyen distinct du support intermédiaire. Ce moyen de pressage peut être de nature pneumatique, comme un soufflage venant du dessous et soufflant entre les rouleaux sur la face inférieure de la feuille, ou une aspiration par le dessus de la feuille. Une aspiration de la face supérieure de la feuille peut être exercée au travers d'orifices ménagés dans la face de bombage de la forme supérieure de bombage. Une aspiration peut également être exercée par une jupe entourant la forme supérieure de bombage. Le WO2011/144865 montre en sa figure 3 une forme supérieure de bombage munie à la fois d'orifice dans sa face de bombage pour aspirer la face supérieure de la feuille et d'une jupe 39 entourant la forme supérieure de bombage pour provoquer un flux d'air vers le haut venant lécher le bord de la feuille. Une force pneumatique met toujours un certain temps à être mise en route. C'est pourquoi lorsqu'une force pneumatique est choisie comme moyen de pressage contre la forme supérieure, il est utile de soulever le plus vite possible la feuille à presser par le support intermédiaire selon l'invention, notamment un cadre intermédiaire, pour lui faire quitter tout contact avec les rouleaux et laisser le temps à la force pneumatique d'atteindre sa force optimale.

Le moyen de pressage de la feuille contre la forme supérieure peut être de nature mécanique et il comprend dans ce cas un cadre de bombage présentant des courbures correspondantes à celles souhaitées pour la forme finale de la feuille de verre et donc également des courbures complémentaires de la forme supérieure de bombage. Le cadre de bombage est de préférence suffisamment rigide pour ne pas se déformer pendant le pressage ni à aucun moment du procédé selon l'invention.

Le dispositif selon l'invention comprend généralement un cadre de bombage comprenant une piste de contact pour supporter la feuille à presser, ladite piste de contact ayant, vis-à-vis de la feuille à presser, une courbure plus accentuée que celles du support intermédiaire, ledit support intermédiaire et ledit cadre de bombage pouvant se déplacer verticalement l'un à l'intérieur de l'autre, ledit cadre de bombage pouvant monter et prendre en charge la périphérie de la feuille en déchargeant au moins partiellement, voire totalement du poids de la feuille le support intermédiaire. Généralement, le support intermédiaire est à l'intérieur du cadre de bombage vue de dessus. Le cadre de bombage peut monter et supporter la périphérie de la feuille en déchargeant au moins partiellement, voire totalement du poids de la feuille le support intermédiaire, et peut le cas échéant, presser ladite feuille contre la forme supérieure de bombage. Selon une direction parallèle au bord de la feuille à presser, le cadre de bombage a une courbure plus accentuée que celles du support intermédiaire. Bien entendu, la direction est « parallèle » vue de dessus, et les courbures sont évaluées vue de côté, étant entendu que la « direction » varie quand on parcourt le bord de la feuille.

Le support intermédiaire et le cadre de bombage supportent le verre en des zones juxtaposés. Si l'on considère une région du verre supporté (par exemple le milieu d'un côté de la feuille de verre), ladite région recouvrant la zone entrant en contact avec le support intermédiaire et la zone entrant en contact avec le cadre de bombage, alors, pour cette région et dans une direction parallèle (vue de dessus) au bord de la feuille à presser, la courbure de la piste de contact du cadre de bombage est supérieure à la courbure de la piste de contact du support intermédiaire vis-à-vis de la feuille à presser. Cette condition sur la courbure relative du support intermédiaire et du cadre de bombage ne vaut que pour les côtés de la feuille de verre entrant en contact à la fois avec le support intermédiaire et avec le cadre de bombage. En effet, le support intermédiaire ne vient pas forcément en contact continu sous tout le périmètre de la feuille de verre et peut par exemple être constitué de deux segments venant sous deux bords seulement de la feuille de verre, de préférence les deux bords les plus longs.

Le support intermédiaire est rigide et, de préférence, ne se déforme pas sous le poids du verre. Il en est de même du cadre de bombage.

Le cadre de bombage peut servir à bomber la feuille à presser par gravité avant son pressage contre la forme supérieure. Dans ce cas, le cadre de bombage ne sert pas nécessairement à presser la feuille de verre à presser contre la forme supérieure. Après bombage par gravité sur le cadre de bombage, le bombage peut être poursuivi par le pressage contre la forme supérieure à l'aide d'un moyen de pressage pneumatique du type aspiration ou soufflage plaquant la feuille à presser contre la forme supérieure de bombage. Dans ce cas, le cadre de bombage présente des courbures intermédiaires à celles du support intermédiaire et celles données par la forme supérieure de bombage, ou des courbures complémentaires à celle de la forme supérieure de bombage.

Le cadre de bombage peut servir de cadre de pressage contre la forme supérieure de bombage. Dans ce cas, le cadre de bombage présente une forme complémentaire à la forme supérieure de bombage. Le cadre de bombage supportant la feuille à presser et la forme supérieure de bombage sont animés d'un mouvement relatif de l'un vers l'autre jusqu'à ce qu'ils pressent la feuille à presser entre eux pour lui donner sa forme finale. Pour ce mouvement relatif, le cadre de bombage monte vers la forme supérieure, et la forme supérieure reste fixe ou descend vers le cadre de bombage. Le pressage exercé par un cadre de bombage peut être assisté grâce à une force pneumatique venant en supplément de la force mécanique exercée par le cadre de bombage. Notamment, il peut être utile qu'une aspiration soit exercée par la face de contact de la forme supérieure de bombage via des orifices dans cette face, pendant le pressage périphérique par le cadre de bombage. En effet, grâce à cette aspiration, l'air éventuellement emprisonné entre la feuille de verre et la forme supérieure de bombage est éliminé. La feuille prend ainsi plus fidèlement la forme de la forme supérieure de bombage. Ainsi, après que le support intermédiaire supporte la feuille à presser, le cadre de bombage presse la périphérie de la feuille à presser contre la forme supérieure de bombage. Ce pressage est exercé par un mouvement de rapprochement entre le cadre de bombage et la forme supérieure de bombage. Généralement pour ce pressage, le cadre de bombage monte plus haut que le support intermédiaire.

Le cadre de bombage peut servir dans un premier temps de cadre de bombage par gravité, puis, dans un deuxième temps de cadre de pressage de la feuille à presser contre la forme supérieure.

Le support intermédiaire et le cadre de bombage (qu'il s'agisse d'un cadre de bombage par gravité et/ou d'un cadre de pressage contre la forme supérieure) se déplacent l'un à l'intérieur de l'autre tout en restant toujours sensiblement horizontaux. Leur mouvement est principalement vertical. L'un de ces deux éléments a un périmètre plus petit que l'autre pour pouvoir passer à travers lui. Généralement, le contour extérieur de l'un de ces deux éléments correspond sensiblement au contour intérieur de l'autre cadre. Le support intermédiaire et le cadre de bombage ne supportent donc pas le verre exactement au même endroit mais en des endroits juxtaposés. Le cadre de bombage supporte la périphérie de la feuille de verre à presser étant entendu que le terme « périphérie » (également appelée « zone périphérique ») correspond à une zone en bordure d'une face principale de la feuille entre le bord du verre et jusqu'à 15 cm et plus généralement jusqu'à 7 cm et plus généralement encore jusqu'à 3 cm du bord du verre. Généralement, le cadre de bombage, s'il sert de cadre de pressage, déborde du verre, c'est-à-dire que le bord extrême du verre repose à l'intérieur de la piste de contact du cadre de bombage. Le support intermédiaire supporte le verre également en sa périphérie et seulement en sa périphérie, entre le bord et 15 cm du bord de la feuille, sans contact avec le verre en zone centrale du verre, c'est-à-dire au-delà de la périphérie à partir du bord du verre. Généralement, c'est le support intermédiaire qui passe à l'intérieur du cadre de bombage. Le cadre de bombage supporte donc le verre plus à l'extérieur que le support intermédiaire.

Selon l'invention, plusieurs cadres intermédiaires peuvent intervenir pour supporter la feuille de verre avant le bombage par pressage. Ces cadres intermédiaires sont juxtaposés les uns à côté des autres vu de dessus et sont généralement contenus les uns dans les autres vus de dessus, sans être nécessairement concentriques.

Le support intermédiaire soulève la feuille de verre à presser le plus vite possible lorsque celle-ci est en position sous la forme supérieure de bombage. Comme le support intermédiaire présente de faibles courbures, voire est plan, il tend à soulever la feuille en la maintenant aussi peu courbée que possible, voire sensiblement plane, et c'est ce qui lui permet de faire quitter à la feuille très rapidement tout contact avec les rouleaux. Il n'en serait pas de même avec un cadre de bombage puisque celui-ci présente des courbures plus fortes que celles du support intermédiaire, voire présente les courbures souhaitées pour la feuille finale. En effet, un cadre de bombage vient au contact de la feuille de verre d'abord aux endroits les plus élevés (généralement les coins), et il faut ensuite une plus longue course vers le haut pour que la feuille ne touche plus les rouleaux. Un cadre de bombage doit donc notamment partir de plus loin en-dessous du niveau supérieur des rouleaux pour que la feuille puisse se déplacer librement sur les rouleaux et venir se placer en position idoine sous la forme supérieure, mais il doit également exercer une course plus importante vers le haut. L'addition de ces deux impératifs se traduit, selon l'art antérieur en l'absence de support intermédiaire, par une durée plus longue pendant lequel la feuille reste en contact avec les rouleaux. Dans le cadre de la présente demande, on appelle « surface de réception », la surface virtuelle constituée par le niveau supérieur des rouleaux situés sous la forme supérieure de bombage, également appelés « rouleaux finaux ». Si les rouleaux sont cylindriques (leur axe étant linéaire), cette surface de réception est plane. Si la surface de réception est plane, les feuilles arrivent planes sur la surface de réception de sorte que la face inférieure de la feuille à presser est exactement dans la surface de réception puisque cette face inférieure de la feuille repose sur le niveau supérieur des rouleaux finaux. Les rouleaux de convoyage sont juxtaposés en un lit et forment par leur niveau supérieur une surface de déplacement pour les feuilles en défilement. Ce lit et cette surface de déplacement sont généralement plans jusqu'à la surface de réception sous la forme supérieure de bombage et y compris cette surface de réception. Les rouleaux de convoyage peuvent cependant également offrir une légère courbure aux feuilles de façon à les prébomber par gravité sur le chemin les menant à la surface de réception. Des rouleaux de ce type, dit « rouleaux formés » sont notamment décrits dans WO2014053776. Dans ce cas, la feuille à presser arrivé légèrement courbée sur la surface de réception sous la forme supérieure de bombage. Dans ce cas, de préférence, le support intermédiaire, notamment du type cadre, présente des courbures correspondant à celles de la feuille arrivée sur la surface de réception.

Le support intermédiaire est sensiblement horizontal et comprend à sa surface tournée vers le haut une piste de contact pour supporter la feuille à presser. Si la feuille à presser arrive plane sur la surface de réception, la piste de contact avec le verre du support intermédiaire est avantageusement plane et dans un plan horizontal. Elle peut également présenter de légères courbures. Ces courbures sont, dans une direction parallèle au bord de la feuille, moins prononcées que celle-souhaitées pour le verre final bombé au même endroit. Ces courbures sont donc, dans une direction parallèle au bord de la feuille, également moins prononcées que celles de la forme supérieure de bombage au même endroit et vis-à-vis de l'autre face de la feuille de verre, étant entendu que les courbures de la piste de contact du support intermédiaire et celles de la forme supérieure de bombage sont inverses. La forme de la piste de contact du support intermédiaire est donc éventuellement une ébauche de la forme finale de la feuille de verre, c'est-à-dire une forme intermédiaire à, d'une part celle de la feuille arrivée sur la surface de réception et, d'autre part celle devant être donnée par la forme supérieure de bombage. Avantageusement, la forme de la piste de contact du support intermédiaire à une forme complémentaire à celle de la face inférieure de la feuille à presser arrivée sur la surface de réception, ce qui correspond habituellement à celle de la surface de réception. De la sorte, dès que le cadre intermédiaire vient toucher la face inférieure de la feuille à presser, c'est l'intégralité de la piste de contact du support intermédiaire qui touche en même temps la face inférieure de la feuille à presser. Le poids de la feuille à presser est ainsi immédiatement répartie sur tout le pourtour de la piste de contact du cadre intermédiaire ce qui réduit les risques de marquage.

Le cadre de bombage est sensiblement horizontal et comprend à sa surface tournée vers le haut une piste pour supporter la feuille de verre, également appelée piste de contact. La piste de contact avec le verre du cadre de bombage présente, dans une direction parallèle au bord de la feuille, une courbure plus prononcées que celles du support intermédiaire. La piste de contact avec le verre du cadre de bombage, s'il sert de cadre de pressage, a une forme complémentaire à celle de la forme supérieure de bombage, c'est-à-dire la même forme que celle-ci en ses zones de contact avec le verre tout en étant inverse de celle de la forme supérieure de bombage. Généralement, la piste de contact du cadre de bombage présente des courbures concaves alors que la face de contact de la forme supérieure de bombage est généralement convexe. Le cadre de bombage supporte la face inférieure de la feuille de verre et la presse éventuellement contre la forme supérieure de bombage. Généralement, le cadre de bombage prend le relai du support intermédiaire en prenant la feuille de verre en charge pour la bomber par gravité et/ou la presser contre la forme supérieure, le support intermédiaire n'ayant alors généralement plus de contact avec la feuille de verre. Il n'est cependant pas exclu que le support intermédiaire reste au contact de la feuille de verre pendant le bombage par gravité et/ou le pressage par le cadre de bombage. Cela peut être souhaité pour soutenir le verre à un autre endroit que le cadre de bombage, notamment si le cadre de bombage sert au pressage et que la forme supérieure de bombage est du type cadre. On peut donc dire que le cadre de bombage décharge le support intermédiaire au moins partiellement, voire totalement, du poids de la feuille avant généralement de presser celle-ci contre la forme supérieure de bombage.

Ainsi, le dispositif selon l'invention peut comprendre un cadre de bombage pouvant presser la feuille à presser contre la forme supérieure de bombage, ledit support intermédiaire et ledit cadre de bombage pouvant se déplacer verticalement l'un à l'intérieur de l'autre, ledit cadre de bombage pouvant monter et entrer en contact avec la périphérie de la feuille à presser. Dans ce cas, de préférence, vue de dessus, le support intermédiaire est à l'intérieur du cadre de bombage. De préférence également, le cadre de bombage peut monter au-dessus de la surface de réception pour prendre en charge la feuille à presser en la contactant exclusivement en sa périphérie, et peut descendre en-dessous de la surface de réception afin de laisser passer une nouvelle feuille à presser jusqu'à la surface de réception. Le cadre de bombage se trouve sous la surface de réception avant sa montée pour prendre en charge la feuille à presser déjà supportée par le support intermédiaire, et retourne sous la surface de réception après le pressage. De la sorte, le support intermédiaire et le cadre de bombage peuvent venir en contact du verre tous deux exclusivement en zone périphérique, l'un après l'autre et le cas échéant en partie simultanément. Ce mode d'action peut être très rapide puisque ces deux outils venant d'en dessous de la surface de réception ont peu de distance à parcourir pour venir au contact du verre et ont peu de distance pour revenir sous la surface de réception. Le cas échéant, la forme supérieure de bombage peut également être animée d'un mouvement vertical pour encore accélérer le processus. En effet, le pressage peut être exercé par le mouvement vertical à la fois du cadre de bombage et de la forme supérieure de bombage.

Le mouvement vers le haut du support intermédiaire et du cadre de bombage peut être alterné ou au moins partiellement simultané. Dans le cas d'un mouvement vers le haut alterné, le support intermédiaire monte d'abord et prend en charge la feuille de verre jusqu'à sa perte de contact avec les rouleaux, puis le cadre de bombage monte et prend en charge la feuille de verre pour la presser contre la forme supérieure de bombage. Le mouvement vers le haut du support intermédiaire et du cadre de bombage peut être au moins partiellement simultané dès lors qu'au début dudit mouvement, la piste de contact du cadre de bombage est suffisamment basse pour permettre le contact immédiat du support intermédiaire avec la feuille à presser dès qu'il passe au-dessus de la surface de réception. De la sorte, le support intermédiaire lors de son déplacement vers le haut prend généralement principalement (plus de 50% du poids de la feuille) voire totalement en charge la feuille de verre, ledit déplacement ayant lieu jusqu'à perte de contact de la feuille avec les rouleaux, puis le support intermédiaire arrête ou ralentit sa montée vers le haut alors que le cadre de bombage continue sa montée et prend généralement principalement (plus de 50% du poids de la feuille) voire totalement en charge la feuille de verre. A ce stade, un éventuel bombage par gravité peut avoir lieu sur le cadre de bombage. Ensuite, le pressage est exercé, une force pneumatique ou mécanique s'exerçant sur la feuille pour la presser contre la forme supérieure. Notamment, le cadre de bombage peut presser la feuille contre la forme supérieure de bombage. Un mouvement vers le haut du support intermédiaire et du cadre de bombage au moins partiellement simultané permet de gagner du temps. Ainsi, il n'est pas exclu que le cadre de bombage touche déjà la périphérie de la feuille à presser dès la prise en charge de ladite feuille par le support intermédiaire. Le cadre de bombage peut ensuite monter plus haut que le support intermédiaire afin de presser la feuille contre la forme supérieure, le support intermédiaire pouvant en outre garder un contact avec la feuille au moment du pressage. On voit que le support intermédiaire et le cadre de bombage peuvent donc garder un contact simultané avec la feuille à presser tout au long de sa montée vers la forme supérieure de bombage, cette action simultanée procurant un gain de temps dans le processus.

La forme supérieure de bombage peut éventuellement être capable de se déplacer verticalement. Ainsi pour le pressage de la feuille, la forme supérieure peut se déplacer vers le bas, puis le moyen de pressage presse la feuille contre la forme supérieure de bombage. Ensuite, la forme supérieure peut éventuellement remonter tout en retenant la feuille bombée contre elle par une force pneumatique que l'on peut qualifier de « montante », le terme « montante » étant utilisé car la force pneumatique tire ou pousse la feuille de verre vers le haut contre la forme supérieure, ladite forme supérieure laissant la place libre à un cadre de refroidissement se plaçant sous elle. La force pneumatique montante est ensuite arrêtée et la feuille bombée est recueillie par le cadre de refroidissement sous elle, lequel emmène ensuite la feuille bombée en zone de refroidissement. Pour ce faire, une force pneumatique descendante (c'est-à-dire un soufflage) peut éventuellement être exercée par la forme supérieure au travers de sa face de bombage si celle-ci comprend au moins un orifice, pour accélérer le détachement de la feuille de la forme supérieure de bombage.

Le mouvement (également appelée « l'activation ») du support intermédiaire peut notamment être déclenché
- à partir du mouvement des rouleaux, ou
- à partir du mouvement du cadre de bombage, ou
- à partir du mouvement de la forme supérieure de bombage.

L'invention concerne un dispositif selon la revendication indépendante de dispositif et un procédé selon la revendication indépendante de procédé.

L'invention concerne un dispositif de bombage de feuilles de verre comprenant des rouleaux de convoyage convoyant les feuilles de verre les unes derrières les autres dans une direction longitudinale et les amenant les unes après les autres sous une forme supérieure de bombage et sur une surface de réception formée par le niveau supérieur des rouleaux sous la forme supérieure de bombage , ledit dispositif comprenant un support intermédiaire comprenant une piste de contact pour supporter la feuille se trouvant sous la forme supérieure de bombage dite « feuille à presser », ladite piste de contact ayant, parallèlement au bord de la feuille à presser, une courbure moins accentuée que celle devant être donnée par la forme supérieure, ledit support intermédiaire pouvant monter au-dessus de la surface de réception et supporter la feuille à presser jusqu'à perte du contact de la feuille avec les rouleaux, ledit support intermédiaire pouvant descendre en-dessous de la surface de réception, un moyen de pressage distinct du support intermédiaire de la feuille pouvant presser la périphérie de la feuille contre la forme supérieure de bombage, le support intermédiaire entrant en contact avec la feuille à presser en une zone de contact, ladite zone de contact étant entièrement en périphérie de la feuille, entre le bord et 15 cm du bord de la feuille.

Pour le cas où le moyen de pressage comprend un cadre de bombage, la forme supérieure de bombage et le cadre de bombage peuvent se déplacer l'un vers l'autre afin de presser entre eux la feuille. Le rapprochement de la forme supérieure de bombage et du cadre de bombage peut être réalisé par abaissement de la forme supérieure ou montée du cadre de bombage ou les deux.

L'invention concerne également un procédé de bombage de feuilles de verre par le dispositif selon l'invention. Selon ce procédé, la feuille de verre à presser sous la forme supérieure de bombage est prise en charge par le support intermédiaire qui monte jusqu'à perte du contact de la feuille avec les rouleaux, puis le moyen de pressage presse la feuille contre la forme supérieure de bombage.

Selon l'invention, pendant sa montée, le support intermédiaire fait quitter le contact du verre avec les rouleaux. Cette action intervient le plus vite possible lorsque la feuille à presser est en position sous la forme supérieure de bombage. C'est la faible concavité voire planéité de la piste de contact du support intermédiaire qui lui permet de soulever très rapidement la feuille à presser au-dessus de la surface de réception de la feuille à presser. En effet, La forme du support intermédiaire correspond avantageusement à la forme de la surface de réception de la feuille à presser sous la forme de bombage. Ainsi, les faibles courbures voire la planéité du support intermédiaire, notamment du type cadre, lui permet d'être juste en-dessous de la surface de réception de la feuille à presser, de sorte qu'un très court déplacement vers le haut suffit pour soulever la feuille et lui faire perdre son contact avec les rouleaux. Cette course serait nécessairement plus longue (en distance et en durée) avec un cadre de bombage, car du fait des plus fortes courbures de sa piste de contact, le cadre de bombage doit partir de bien plus bas sous la surface de réception de la feuille à presser. Ainsi, quel que soit le moyen de pressage utilisé, le support intermédiaire exerce une prise en charge très rapide et une immédiate perte de contact de la feuille avec les rouleaux en résulte.

Tous les outils venant en contact avec le verre (support intermédiaire, cadre de bombage, forme supérieure de bombage, cadre de refroidissement) sont généralement recouverts d'un textile réfractaire adoucissant le contact avec le verre. Ces outils de bombage peuvent se trouver dans un four (c'est-à-dire une enceinte chauffante), maintenant le verre à sa température de déformation, généralement entre 550 et 1000°C. Pour le cas du formage d'une feuille de verre sodocalcique, la température est généralement comprise dans le domaine allant de 550 à 700°C. Pour le cas du formage d'une feuille de verre précurseur de vitrocéramique, la température est généralement comprise dans le domaine allant de 700 à 1000°C. Cependant, généralement, ces outils de bombage ne se trouvent pas dans un four, mais juste derrière un four ayant chauffé les feuilles à leur température de bombage thermique. Ainsi, généralement, le lit de rouleaux de convoyage traverse un four pour porter les feuilles à leur température de déformation, sort du four et amène les feuilles de verre sous la forme supérieure de bombage située hors du four, derrière la sortie du four.

Les feuilles de verres portent souvent une couche d'émail, notamment en leur périphérie. Avantageusement, le support intermédiaire vient en contact avec la feuille à presser dans une zone opacifiée par de l'émail, dite zone opacifiée. Il est avantageux que le support intermédiaire ainsi que le cadre de bombage, supportent tous deux le verre en zone opacifiée ou en une zone recouverte finalement par un joint en utilisation finale, puisque l'éventuel marquage résultant de ces contacts est caché. Il n'est cependant pas exclu que le support intermédiaire supporte la feuille à presser en zone non opacifiée (c'est-à-dire en zone claire), mais on préfère en général l'éviter. Ceci vaut surtout pour les grandes feuilles de verre, notamment d'aire de face principale supérieure à 1 m². En effet, un tel soutient du verre loin du bord par le support intermédiaire réduit la tendance à l'effondrement du verre sous l'effet de son poids et de la température, cette tendance étant d'autant plus forte au centre de la feuille que celle-ci est grande.

La piste de contact du support intermédiaire et celle du cadre de bombage peut avoir une largeur comprise entre 5 et 20 mm. On utilise une piste de contact plus large, de largeur comprise entre 10 et 20 mm pour le support intermédiaire si celui-ci entre en contact avec une zone claire (non-cachée en utilisation finale) du vitrage. Une plus grande largeur de piste venant en contact avec le verre réduit la pression du verre sur la piste et en conséquence, la tendance au marquage du verre. Cette piste de contact entre généralement en contact avec le verre exclusivement en zone périphérique.

Le lit de rouleaux amène les feuilles de verre individuellement les unes derrière les autres jusqu'à une position sous la forme supérieure de bombage. Des rouleaux dudit lit, généralement 2 ou 3 ou 4 rouleaux, voire plus, se trouvent aussi sous la forme supérieure de bombage. Ces rouleaux sont les derniers rouleaux du lit de rouleau à recevoir les feuilles de verre avant bombage contre la forme supérieure et peuvent pour cette raison être appelés « rouleaux finaux ». Ces rouleaux finaux ne gênent pas le déplacement vertical du support intermédiaire et du cadre de bombage de part et d'autre de la surface de réception des feuilles à presser sous la forme supérieure de bombage. L'usage du terme « finaux » ne signifie pas que le lit de rouleau ne continue pas en direction longitudinale, puisqu'après pressage contre la forme de bombage, il n'est pas exclu que la feuille ne retombe sur le lit de rouleau pour continuer sa course en direction longitudinale.

Notamment, ces rouleaux finaux sous la forme supérieure de bombage peuvent être moins longs que les autres rouleaux du lit et, vu de dessus, se trouver à l'intérieur du support intermédiaire et du cadre de bombage. De la sorte, le support intermédiaire et le cadre de bombage peuvent passer au-dessus ou au-dessous de la surface de réception de la feuille de verre formée par le haut de ces rouleaux finaux. Les rouleaux finaux peuvent aussi dépasser du support intermédiaire vue de dessus. Dans ce cas, le support intermédiaire peut présenter une piste de contact discontinue vis-à-vis de la face inférieure de la feuille de verre, la piste de contact du support intermédiaire étant alors constituée pour partie de segments passant entre les rouleaux lors du mouvement vertical du support intermédiaire. Ces segments peuvent être des encoches ménagées dans des côtés du support intermédiaire comme sur le cadre de pressage référencé 21 de la figure 3 du WO02/06170. Ainsi, le support intermédiaire peut présenter une piste de contact continue ou discontinue vis-à-vis de la face inférieure du verre. Le support intermédiaire peut même ne supporter que deux côtés de la feuille de verre auquel cas il peut être constitué de deux segments. En général, les segments supportent les côtés les plus longs de la feuille de verre. Le cadre de bombage peut également être discontinu et pour les mêmes raisons. Le cadre de bombage vient de préférence en contact de tous les côtés de la feuille de verre, tout en offrant un contact éventuellement discontinu.

Le support intermédiaire est généralement un cadre ou est constitué de segments, et sa piste de contact avec le verre est continue ou discontinue, ledit support intermédiaire ne venant généralement en contact avec le verre qu'en sa périphérie, c'est-à-dire jusqu'à 15 cm du bord du verre et de préférence jusqu'à 7 cm et de préférence encore jusqu'à 3 cm du bord du verre, sans contact avec le verre au-delà de 15 cm du bord du verre et plus généralement au-delà de 7 cm et plus généralement encore au-delà de 3 cm du bord du verre.

Le lit de rouleaux est moteur car il fait avancer les feuilles de verre jusque sous la forme supérieure de bombage. Les rouleaux finaux sont aussi moteurs. Les rouleaux finaux ralentissent et s'arrêtent lorsque la feuille à presser est en position sous la forme supérieure de bombage. On cherche à ce que la feuille à presser soit en position optimale sous la forme supérieure de bombage, c'est-à-dire qu'elle soit en exacte position vue de dessus sous la forme supérieure de bombage de sorte qu'il n'y ait plus qu'à la monter pour la presser. La feuille à presser peut notamment trouver sa position optimale sous la forme supérieure de bombage en venant en butée par sa tranche contre au moins une butée de position et généralement au moins deux butées de position. Ainsi, au moins une butée de position peut stopper la course de la feuille à presser en direction longitudinale. L'usage de butées n'est pas indispensable, un positionnement satisfaisant de la feuille pouvant éventuellement être obtenu par une maitrise suffisante du mouvement des rouleaux de convoyage et le cas échéant de télémètres déterminant la position de la feuille de verre à presser.

Lorsque le verre est venu en contact avec au moins une butée de position, les rouleaux finaux sont stoppés en tant que rouleaux moteurs. Pour éviter un marquage du verre par ces rouleaux finaux continuant de tourner alors que le verre est arrêté par au moins une butée, on cherche à faire coïncider le mieux possible le moment auquel le verre touche la ou les butée(s) de position et le moment de l'arrêt du moteur entraînant les rouleaux finaux en rotation. La coïncidence exacte de ces deux événements est cependant difficile à atteindre, voire même impossible, et c'est pourquoi il est avantageux que le support intermédiaire soulève le plus vite possible la feuille de verre venant de toucher la ou les butée(s) de position. De la sorte, une poursuite de la rotation des rouleaux finaux ne gêne pas puisque ces rouleaux ne sont plus en contact avec le verre. Notons que l'on cherche à limiter le plus possible le temps de contact du verre avec des rouleaux fixes également parce que les échanges thermiques localisés qui en résultent provoquent des défauts optiques visibles dans le verre en transmission.

Selon une possibilité, le support intermédiaire se soulève et prend en charge la feuille de verre alors que celle-ci n'a touché aucune butée de position, et le cas échéant alors que les rouleaux ne sont pas encore totalement arrêtés. Si les rouleaux ne sont pas totalement arrêtés ils ont été ralentis au moment de cette prise en charge de la feuille à presser par le support intermédiaire. Après cette prise en charge éliminant le contact entre les rouleaux finaux et la feuille de verre, le support intermédiaire supportant la feuille se déplace au moins en direction longitudinale pour donner à la feuille sa position optimale, le cas échéant en faisant toucher au verre au moins une butée de position longitudinale et généralement deux butées de position. Ainsi, le support intermédiaire peut monter au-dessus de la surface de réception et supporter la feuille à presser jusqu'à perte du contact de la feuille avec les rouleaux, puis effectuer une course en direction longitudinale pour placer la feuille à presser en position optimale sous la forme supérieure de bombage. Le support intermédiaire remplace en quelque sorte ici les rouleaux finaux pour les derniers millimètres de déplacement de la feuille à presser en direction longitudinale. Suite au contact du verre avec au moins une butée, il y a inévitablement un très léger glissement de la feuille de verre sur le support intermédiaire. Cependant, on a observé que ce glissement laisse moins de marque sur le verre qu'un glissement sur les rouleaux finaux. De plus, la zone de contact du support intermédiaire avec la feuille de verre à presser (ensemble des points de la feuille de verre à presser venant en contact avec le support intermédiaire) se trouve généralement entièrement en périphérie de ladite feuille (pas de contact donc avec le verre au-delà de la périphérie vers le centre du verre) ladite périphérie étant généralement cachée en utilisation finale par un joint ou par de l'émail opaque. De la sorte, même si le contact du verre avec au moins une butée provoque un très léger glissement du verre sur le support intermédiaire, l'éventuel marquage en résultant est beaucoup plus acceptable qu'un glissement du verre sur les rouleaux. Le déplacement en direction longitudinale du support intermédiaire peut être accompagné du même déplacement longitudinal du cadre de bombage. En effet, à ce stade du procédé, le support intermédiaire et le cadre de bombage sont très proches l'un de l'autre et se trouvent l'un dans l'autre vue de dessus. Cependant, il peut exister un jeu suffisant entre ces deux cadres pour que le déplacement longitudinal du support intermédiaire, par ailleurs de faible ampleur, n'implique pas un déplacement équivalent du cadre de bombage.

Notamment, le positionnement exact de la feuille de verre peut être assuré en direction longitudinale et en direction latérale (c'est-à-dire en X-Y) grâce à au moins deux butées de position. Notamment, il peut y avoir une ou deux butées plutôt dédiées à stopper la course de la feuille de verre à presser en direction longitudinale et une butée plutôt dédiées à stopper la course de la feuille en direction latérale. Le choix du nombre de butées et leur position dépend de la géométrie du vitrage.

Selon un mode de réalisation, on peut utiliser au moins deux butées, l'une stoppant la course de la feuille à presser en direction longitudinale et l'autre stoppant la course de la feuille à presser en direction latérale. Dans ce cas, juste avant que la feuille de verre ne touche au moins une butée stoppant sa course longitudinale, le support intermédiaire se soulève et prend en charge la feuille de verre. Après cette prise en charge éliminant le contact entre les rouleaux finaux et la feuille de verre, le support intermédiaire supportant la feuille se déplace à la fois d'une part en direction longitudinale pour faire toucher au verre au moins une butée stoppant sa course longitudinale, et d'autre part en direction latérale pour faire toucher au verre au moins une butée stoppant sa course en direction latérale. Le déplacement du support intermédiaire a donc une composante longitudinale et une composante latérale. Ici également, le déplacement combiné en direction longitudinale et en direction latérale du support intermédiaire peut être accompagné du même déplacement combiné du cadre de bombage, si nécessaire. Ainsi, selon ce mode de réalisation, le dispositif selon l'invention comprend au moins deux butées de position pouvant stopper la course de la feuille à presser en direction longitudinale et en direction latérale, le support intermédiaire pouvant monter et supporter la feuille à presser jusqu'à perte du contact de la feuille avec les rouleaux, puis il effectue une course en direction longitudinale et une course en direction latérale jusqu'à ce que la feuille touche les au moins deux butées de position.

Lorsque le support intermédiaire portant la feuille de verre à presser effectue une course longitudinale et une course latérale, ces deux courses peuvent ne pas être simultanées, mais elles sont de préférence au moins partiellement simultanées et même totalement simultanées.

La prise en charge de la feuille à presser par le support intermédiaire jusqu'à perte du contact de la feuille à presser avec les rouleaux pour effectuer ensuite une course en direction longitudinale et éventuellement en direction latérale pour la placer en position optimale, correspond à un mode perfectionné et préféré de réalisation de l'invention. Cependant, ce déplacement en direction longitudinale et éventuellement en direction latérale donné à la feuille par le support intermédiaire n'est pas indispensable pour une réalisation satisfaisante de l'invention. Le dispositif selon lequel le support intermédiaire ne se déplace que verticalement est ainsi plus simple.

Alors que la feuille de verre est supportée par le support intermédiaire et a quitté tout contact avec les rouleaux finaux, et que la feuille de verre à presser est en position optimale, le cas échéant en contact avec au moins une butée de position, le moyen de pressage intervient pour plaquer la feuille contre la forme supérieure de bombage. Notamment, un cadre de bombage peut se soulever, prendre en charge la feuille de verre qui quitte alors généralement tout contact avec le support intermédiaire, et le cadre de bombage va à la rencontre de la forme supérieure de bombage pour presser la feuille contre cette forme et donc la bomber pour lui donner sa forme finale souhaitée.

Après le pressage donnant sa forme finale à la feuille, il convient de refroidir la feuille pour qu'elle conserve sa forme bombée. Différents système venant récupérer la feuille et l'emmenant en zone de refroidissement sont possibles. On peut simplement laisser retomber la feuille sur le lit de rouleaux, lequel achemine alors la feuille bombée vers la zone de refroidissement. On préfère utiliser un cadre de refroidissement venant récupérer la feuille bombée sous la forme supérieure de bombage. A titre d'exemple on peut suivre la procédure suivante: après pressage, la forme supérieure de bombage maintient la feuille contre elle grâce à une force pneumatique comme une aspiration exercée au travers d'orifice à sa surface de contact avec la feuille, permettant à un cadre de bombage ayant exercé un pressage de redescendre sans entraîner la feuille avec lui. Un cadre de refroidissement est alors amené sous la forme supérieure de bombage, puis la force pneumatique montante est arrêtée et la feuille de verre bombée tombe alors sur le cadre de refroidissement. Le cas échéant, un léger soufflage peut même être exercé par la forme supérieure de bombage au travers des orifices dans sa face de contact pour aider au détachement de la feuille de verre de la forme supérieure de bombage. Le cadre de refroidissement a avantageusement la forme finale souhaitée pour la feuille. Le cadre de refroidissement se déplace alors pour emmener la feuille de verre bombée en zone de refroidissement. Le cas échéant, un durcissement ou une trempe thermique peut être appliqué à la feuille par soufflage d'air de refroidissement.

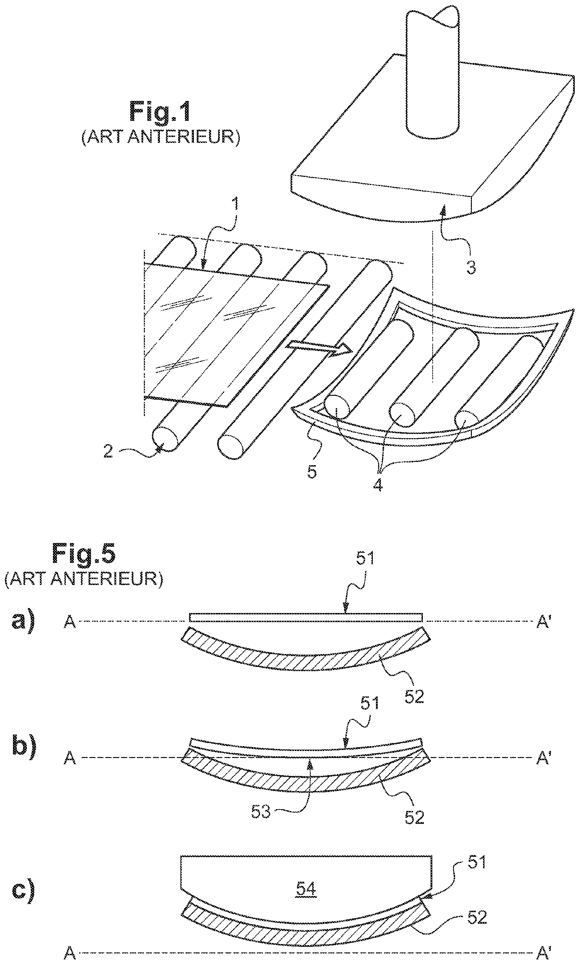

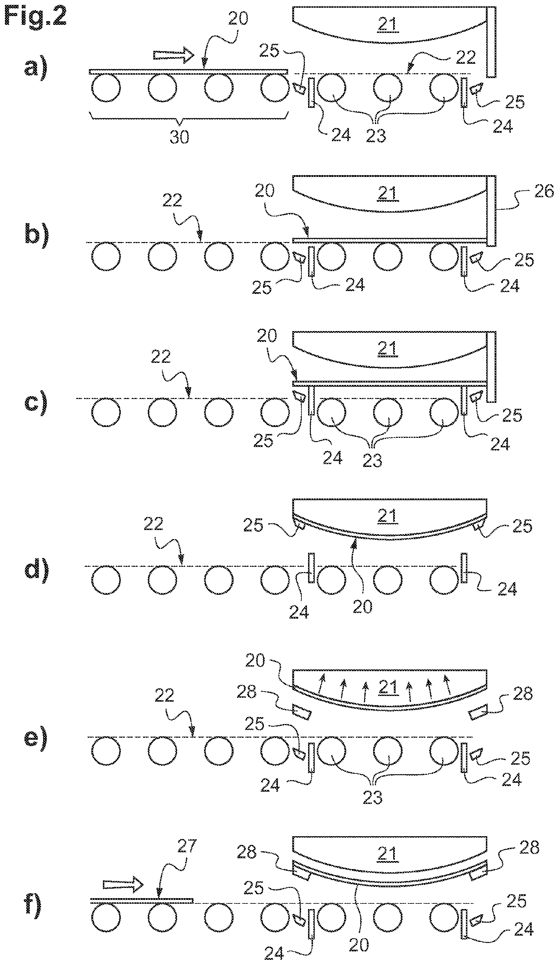

La forme supérieure de bombage peut être un cadre ou une forme pleine. Par forme pleine, on entend qu'elle entre en contact avec le verre non seulement à sa périphérie mais aussi sur l'ensemble de la surface du verre et notamment dans sa région centrale. Une forme pleine peut néanmoins comprendre des orifices à sa surface comme illustré sur les figures 2 et 5 du WO2011/144865, ces orifices pouvant être de grande dimension, notamment formés par le croisement de tôles ou plaques orientées perpendiculairement à la surface de bombage (voir fig 5 du WO2011/144865). Les orifices à la surface de contact avec le verre peuvent servir à exercer une aspiration ou un soufflage. Une aspiration est exercée notamment lorsque la feuille de verre venant d'être bombée doit être retenue par la forme supérieure de bombage alors qu'aucun outil de bombage ne la supporte par sa face inférieure. Un soufflage peut éventuellement être exercé par les mêmes orifices lorsque l'on souhaite détacher la feuille de la forme supérieure, notamment lorsqu'on veut la poser sur un cadre de refroidissement.

Après le pressage de la feuille, celle-ci peut être maintenue en contact avec la forme supérieure de bombage grâce à une aspiration exercée au travers de ses orifices dans sa face de contact avec le verre ou grâce à une jupe, alors que la feuille n'a plus de contact avec aucun outil de bombage par sa face inférieure (support intermédiaire ou cadre de bombage), et un cadre de refroidissement peut être placé sous la feuille encore en contact avec la forme supérieure de bombage. L'aspiration est alors stoppée et la feuille est recueillie par le cadre de refroidissement, puis le cadre de refroidissement entraîne la feuille bombée dans une zone de refroidissement, puis la feuille est refroidit.

La présente invention concerne tout type de verre, clair ou teinté, revêtu d'au moins une couche, émaillé ou non émaillé. La feuille traitée selon l'invention peut servir à toute application dans le domaine automobile ou agricole (voiture, camions, bus, etc) pour faire office de pare-brise, lunette arrière, vitre latérale, custode, toit, bayflush ou autre. La feuille traitée selon l'invention peut également servir dans tout domaine hors automobile tel que le bâtiment, le solaire, les applications de spécialité, l'aéronautique, les plaques de cuisson en vitrocéramique, etc). La feuille traitée selon l'invention peut avoir toute épaisseur (généralement comprise dans le domaine allant de 1 à 100 mm) et avoir toute dimension, sans limite d'épaisseur ou de dimensions de faces principales. La feuille traitée selon l'invention peut être trempée. Elle peut être incorporée dans un vitrage feuilleté. Elle peut être céramisée par un traitement thermique ultérieur si elle est du type précurseur de vitrocéramique.
La figure 1 représente un dispositif selon l'art antérieur. Une feuille de verre plane 1 est convoyée sur un lit de rouleaux 2 en direction longitudinale (indiquée par une flèche) pour l'amener sous une forme supérieure de bombage 3, ladite forme étant pleine et convexe. La feuille de verre plane vient de sortir d'un four l'ayant portée à sa température de déformation. En fin de course longitudinale, la feuille se trouve sur les trois rouleaux finaux 4. Ces rouleaux finaux 4 sont moins longs que les rouleaux de convoyage les précédant. En effet, vu de dessus, ces rouleaux finaux sont circonscrits par le cadre de bombage 5, lequel se trouve sous le plan horizontal de convoyage tant que la feuille ne se trouve pas encore sous la forme supérieure de bombage 3. Quand la feuille est en position optimale sous la forme supérieure de bombage, alors le cadre de bombage 5 monte pour prendre en charge la feuille et la presser contre la forme supérieure de bombage. La forme supérieure 3 peut aussi se déplacer vers le bas pour venir à la rencontre de la feuille à presser.
La figure 2 représente le dispositif selon l'invention vue de côté à différentes étapes du processus de bombage d'une feuille de verre 20. En a), la feuille de verre 20 est convoyée par un lit de rouleaux 30 selon une direction longitudinale (flèche) vers une position sous la forme de bombage 21. Elle vient de sortir d'un four l'ayant portée à sa température de déformation. La feuille va être réceptionnée selon la surface de réception plane et horizontale 22 formé par le haut des rouleaux finaux 23. A ce stade, le support intermédiaire 24 et le cadre de bombage 25 se trouvent sous la surface de réception 22, laissant le passage à la feuille de verre pour venir se positionner sous la forme supérieure de bombage. En b), la feuille vient de toucher la butée de position 26 stoppant la course de la feuille en direction longitudinale et lui donnant sa position optimale sous la forme supérieure de bombage 21. En c), le support intermédiaire 24 a effectué un déplacement vertical ascendant pour prendre en charge la périphérie de la feuille de verre 20, laquelle ne touche plus les rouleaux finaux 23. En d), le cadre de bombage 25 a effectué un déplacement vertical ascendant pour prendre en charge la périphérie de la feuille de verre, en en déchargeant le support intermédiaire 24, puis a pressé la feuille de verre 20 contre la forme supérieure de bombage 21. A ce stade la butée 26 n'est plus nécessaire et a été escamotée et n'est plus représentée. En e), la forme supérieure de bombage 21 exerce une aspiration au travers d'orifices à sa face de bombage afin de retenir la feuille de verre bombée contre elle malgré l'abaissement du cadre de bombage 25. Un cadre de refroidissement 28 s'est positionné sous la feuille de verre encore plaquée contre la forme supérieure de bombage. Le support intermédiaire 24 et le cadre de bombage 25 sont redescendus sous la surface de réception 22 des feuilles de verre. En f), l'aspiration exercée par la forme supérieure de bombage a cessé et la feuille bombée 20 est tombée sur le cadre de refroidissement 28. La feuille 20 peut ainsi être évacuée vers une zone de refroidissement. Une nouvelle feuille de verre plane 27 approche pour venir subir le même traitement de bombage que la feuille 20.
La figure 3 représente le dispositif selon l'invention dans la variante selon laquelle c'est le support intermédiaire qui amène la feuille de verre au contact de la butée de position par un mouvement en direction longitudinale. En a), la feuille de verre 20 est arrêtée sous la forme supérieure de bombage 21 avant de toucher la butée 26, et ce, par arrêt de la rotation des rouleaux moteur finaux 23. En b), le support intermédiaire plan a effectué un déplacement vertical ascendant et a pris en charge la feuille de verre qui ne touche plus les rouleaux. A ce stade, la feuille n'est pas encore en position optimale sous la forme de bombage car le support intermédiaire ne s'est pas encore déplacé en direction longitudinale vers la droite. En c), le support intermédiaire 24 s'est déplacé vers la droite jusqu'à ce que la feuille de verre 20 vienne en contact avec la butée de position 26. La feuille de verre est alors en position optimale sous la forme supérieure de bombage 21. La suite du procédé est ensuite celui de la figure 2 d) à f), le cadre de bombage 25 prenant en charge la feuille de verre pour venir la presser contre la forme supérieure de bombage 21.
La figure 4 représente le dispositif selon l'invention vue de dessus dans la variante selon laquelle le support intermédiaire plan 24 amène la feuille de verre 20 au contact de deux butées de position 41 et 42 par un mouvement en direction longitudinale (X), et au contact d'une butée de position 40 par un mouvement en direction latérale (Y). Ces mouvements en X-Y sont de préférence simultanés et non pas l'un après l'autre. En a), le support intermédiaire est décalé par rapport au cadre de bombage 25. Il prend en charge la feuille de verre 20. Il se déplace ensuite en direction X et Y jusqu'à ce que la feuille touche les butées de position 41, 42 et 40, ce qui est représenté en b). La feuille est alors en position optimale sous la forme supérieure de bombage et le cadre de bombage peut se soulever pour la prendre en charge et la presser contre la forme supérieure de bombage.
La figure 5 représente le dispositif selon l'art antérieur vue de côté. En fig 5a), la feuille de verre plane 51 est arrivée en position sous la forme supérieure de bombage (non représentée). Elle est arrêtée et se trouve sur la surface de réception plane et horizontale AA' en pointillés, lesdits pointillés représentant la surface virtuelle constituée par le haut des rouleaux de convoyage (non représentés). Un cadre de pressage 52 est sous la surface de réception de la feuille et prêt à monter pour la prendre en charge. En figure 5b), le cadre de pressage 52 a commencé à monter pour prendre en charge la feuille de verre 51. Le cadre de pressage ne touche la feuille qu'en ses points les plus hauts, ce qui fait que le centre 53 de la feuille touche encore les rouleaux symbolisés par la surface de réception plane AA'. En fig5c), le cadre de pressage 52 et la forme supérieure de bombage 54 se sont rejoints pour presser la feuille 51 entre eux.

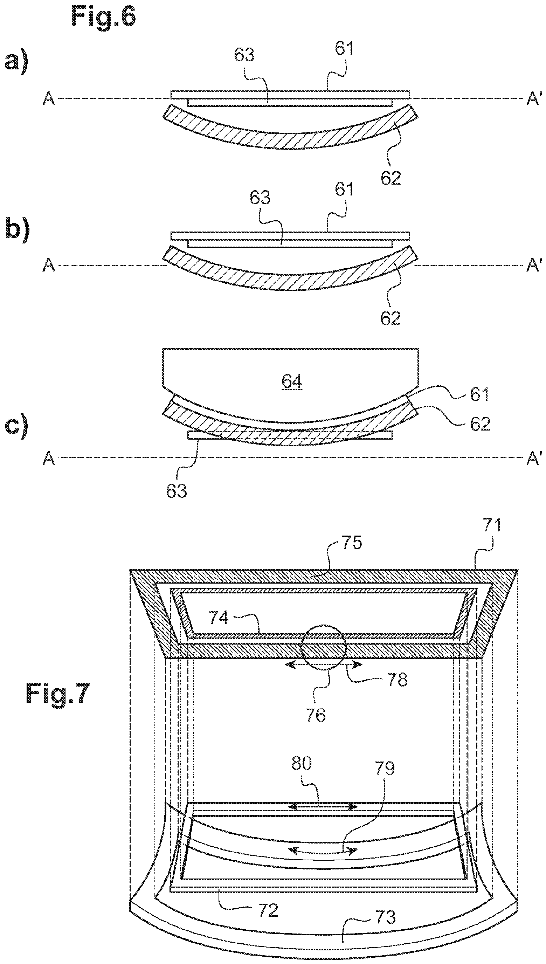

La figure 6 représente le dispositif selon l'invention vue de côté, pour comparaison avec la figure 5 représentant l'art antérieur. En figure 6a), la feuille de verre plane 61 est arrivée en position sous la forme supérieure de bombage (non représentée). Elle est arrêtée et se trouve sur la surface de réception plane AA'. Le cadre de pressage 62 et le support intermédiaire 63 sont tous deux sous la surface de réception de la feuille et prêts à monter pour la prendre en charge. En figure 6b), le support intermédiaire 63 est monté pour prendre en charge la feuille de verre 61 qui quitte immédiatement le contact avec les rouleaux, notamment en sa région centrale, du fait qu'elle est maintenue quasi-plane grâce à la planéité du support intermédiaire 63. Le cadre de pressage 62 est monté également, et simultanément à la montée du support intermédiaire, mais ne touche pas encore le verre. En figure 6c), le cadre de pressage 62 et la forme supérieure de bombage 64 se sont rejoints pour presser la feuille 61 entre eux. Le support intermédiaire 63 est représenté encore en contact avec la feuille de verre, mais cela pourrait aussi ne plus être le cas, le support intermédiaire pouvant se trouver en plus basse position.
La figure 7 représente la face principale inférieure d'une feuille de verre plane 71 destinée à venir au contact selon l'invention avec le support intermédiaire 72 et le cadre de bombage 73. La zone de contact du verre avec le support intermédiaire est la zone 74. La zone de contact du verre avec le cadre de bombage est la zone 75. Si l'on considère la région 76 du verre supporté au milieu d'un côté de la feuille de verre, ladite région recouvrant la zone 74 entrant en contact avec le support intermédiaire et la zone 75 entrant en contact avec le cadre de bombage, alors, pour cette région 76 et dans une direction 78 parallèle (vue de dessus) au bord de la feuille à presser, la courbure 79 de la piste de contact du cadre de bombage 73 est supérieure à la courbure 80 de la piste de contact du support intermédiaire 72, cette dernière courbure étant d'ailleurs nulle (rayon de courbure infini) puisque le support intermédiaire 72 est ici plan. Ces courbures sont comparées sur le plan de leur interaction avec la feuille et elles sont donc comparées vue de côté.

## Revendications

1. Dispositif de bombage de feuilles de verre comprenant des rouleaux de convoyage (30) convoyant les feuilles de verre (20) les unes derrières les autres dans une direction longitudinale et les amenant les unes après les autres sous une forme supérieure de bombage (21) et sur une surface de réception (22) formée par le niveau supérieur des rouleaux sous la forme supérieure de bombage, **caractérisé en ce qu'**il comprend un support intermédiaire (24) comprenant une piste de contact pour supporter la feuille se trouvant sous la forme supérieure de bombage dite feuille à presser, ladite piste de contact étant plane ou ayant, parallèlement au bord de la feuille à presser, une courbure moins accentuée que celle devant être donnée par la forme supérieure, ledit support intermédiaire pouvant monter au-dessus de la surface de réception et supporter la feuille à presser jusqu'à perte du contact de la feuille avec les rouleaux, ledit support intermédiaire pouvant descendre en-dessous de la surface de réception (22), un moyen de pressage (25) de la feuille distinct du support intermédiaire pouvant presser la périphérie de la feuille contre la forme supérieure de bombage, le support intermédiaire (24) entrant en contact avec la feuille à presser en une zone de contact, ladite zone de contact étant entièrement en périphérie de la feuille, entre le bord et 15 cm du bord de la feuille.

2. Dispositif selon la revendication précédente caractérisé en que le support intermédiaire (24) entre en contact avec la feuille à presser (20) en une zone de contact, ladite zone de contact étant entièrement en périphérie de la feuille, entre le bord et 7 cm du bord de la feuille et de préférence encore entre le bord et 3 cm du bord de la feuille.

3. Dispositif selon l'une des revendications précédentes, **caractérisé en ce qu'**il comprend un cadre de bombage (25) comprenant une piste de contact pour supporter la feuille à presser, ladite piste de contact ayant une courbure plus accentuée que celle du support intermédiaire dans une direction parallèle au bord de la feuille, ledit support intermédiaire et ledit cadre de bombage pouvant se déplacer verticalement l'un à l'intérieur de l'autre, ledit cadre de bombage pouvant monter et entrer en contact avec la périphérie de la feuille à presser.

4. Dispositif selon la revendication précédente, **caractérisé en ce que** le moyen de pressage comprend le cadre de bombage dont la piste de contact a une forme complémentaire à celle de la forme supérieure de bombage, le cadre de bombage (25) pouvant presser la feuille à presser contre la forme supérieure de bombage (21).

5. Dispositif selon l'une des deux revendications précédentes, **caractérisé en ce que** vue de dessus, le support intermédiaire est à l'intérieur du cadre de bombage.

6. Dispositif selon l'une des revendications 3 à 5, **caractérisé en ce que** le cadre de bombage peut monter au-dessus de la surface de réception (22) pour prendre en charge la feuille à presser, et peut descendre en-dessous de la surface de réception.

7. Dispositif selon la revendication 2, **caractérisé en ce que** le moyen de pressage (25) comprend un cadre de bombage dont la piste de contact a une forme complémentaire à celle de la forme supérieure de bombage (21), le cadre de bombage pouvant monter au-dessus de la surface de réception (22) et prendre en charge la feuille à presser (20) en la contactant exclusivement en sa périphérie et pouvant presser celle-ci contre la forme supérieure de bombage, ledit support intermédiaire et ledit cadre de bombage pouvant se déplacer verticalement l'un à l'intérieur de l'autre, vue de dessus le support intermédiaire étant à l'intérieur du cadre de bombage, le cadre de bombage pouvant descendre en-dessous de la surface de réception.

8. Dispositif selon l'une des revendications précédentes, **caractérisé en ce que** le support intermédiaire (24) peut monter au-dessus de la surface de réception (22) et supporter la feuille à presser jusqu'à perte du contact de la feuille avec les rouleaux (23), puis effectuer une course en direction longitudinale pour placer la feuille à presser en position optimale sous la forme supérieure de bombage (21).

9. Dispositif selon la revendication précédente, **caractérisé en ce que** le support intermédiaire peut monter au-dessus de la surface de réception et supporter la feuille à presser jusqu'à perte du contact de la feuille avec les rouleaux, puis effectuer une course en direction longitudinale et une course en direction latérale pour placer la feuille à presser en position optimale sous la forme supérieure de bombage.

10. Dispositif selon la revendication précédente, **caractérisé en ce que** la course en direction longitudinale et la course en direction latérale ont lieu au moins partiellement simultanément.

11. Dispositif selon l'une des revendications précédentes, **caractérisé en ce que** la position optimale de la feuille à presser sous la forme supérieure de bombage est déterminée par le contact de la tranche de la feuille à presser contre au moins une butée (26) stoppant la course de la feuille à presser en direction longitudinale.

12. Dispositif selon l'une des revendications précédentes, **caractérisé en ce qu'**il comprend un moyen pneumatique permettant de retenir la feuille bombée contre la forme supérieure de bombage, le moyen pneumatique étant notamment un moyen d'aspiration équipant la forme supérieure de bombage, celle-ci comprenant des orifices placés en sa face de contact avec la feuille à presser, ou comprenant une jupe l'entourant.

13. Dispositif selon l'une des revendications précédentes, **caractérisé en ce que** le support intermédiaire est plan.

14. Dispositif selon l'une des revendications précédentes, **caractérisé en ce que** la piste de contact du support intermédiaire a une largeur comprise entre 5 et 20 mm.

15. Procédé de bombage de feuilles de verre par le dispositif de l'une des revendications précédentes, **caractérisé en ce que** la feuille à presser (20) est amenée par les rouleaux de convoyage (30, 23) sur la surface de réception (22) sous la forme supérieure de bombage (21), puis le support intermédiaire monte au-dessus de la surface de réception et vient supporter la feuille à presser jusqu'à perte du contact de la feuille avec les rouleaux, puis le moyen de pressage (25) presse la feuille contre la forme supérieure de bombage.

16. Procédé selon la revendication précédente, **caractérisé en ce que** le dispositif comprend un cadre de bombage (25) comprenant une piste de contact pour entrer en contact avec la feuille à presser, ladite piste de contact ayant, parallèlement au bord de la feuille, une courbure plus accentuée que celle du support intermédiaire, ledit support intermédiaire et ledit cadre de bombage pouvant se déplacer verticalement l'un à l'intérieur de l'autre, ledit cadre de bombage montant et entrant en contact avec la périphérie de la feuille à presser.

17. Procédé selon la revendication précédente, **caractérisé en ce que** le moyen de pressage (25) comprend le cadre de bombage dont la piste de contact a une forme complémentaire à celle de la forme supérieure de bombage, et **en ce que** après que le support intermédiaire (24) supporte la feuille à presser, le cadre de bombage (25) presse la périphérie de la feuille à presser contre la forme supérieure de bombage (21).

18. Procédé selon la revendication précédente, **caractérisé en ce que** le support intermédiaire et le cadre de bombage entrent en contact avec la feuille à presser exclusivement en sa périphérie, le support intermédiaire étant, vue de dessus, à l'intérieur du cadre de bombage, le cadre de bombage se trouvant sous la surface de réception avant sa montée et retournant sous la surface de réception après le pressage.

19. Procédé selon l'une des revendications précédentes de procédé, **caractérisé en ce que** le support intermédiaire supportant la feuille à presser effectue une course en direction longitudinale jusqu'au positionnement optimal de la feuille à presser sous la forme supérieure de bombage.

20. Procédé selon la revendication précédente, **caractérisé en ce que** le support intermédiaire supportant la feuille à presser effectue une course en direction longitudinale et une course en direction latérale jusqu'au positionnement optimal de la feuille à presser sous la forme supérieure de bombage.

21. Procédé selon l'une des revendications précédentes de procédé, **caractérisé en ce que** la position optimale de la feuille à presser sous la forme supérieure de bombage est déterminé par le contact de la tranche de la feuille à presser contre au moins une butée (26) de position stoppant sa course en direction longitudinale.

22. Procédé selon l'une des revendications précédentes de procédé, **caractérisé en ce que** la feuille à presser porte une couche d'émail et **en ce que** le support intermédiaire vient en contact avec la feuille à presser dans une zone opacifiée par l'émail.

23. Procédé selon la revendication précédente, **caractérisé en ce que** le support intermédiaire monte et vient supporter la feuille à presser alors que les rouleaux ne sont pas encore arrêtés.

24. Procédé selon l'une des revendications précédentes de procédé, **caractérisé en ce que** le dispositif comprend un moyen pneumatique pouvant exercer une force pneumatique permettant de retenir la feuille bombée contre la forme supérieure de bombage, ledit moyen pneumatique retenant la feuille bombée contre la forme supérieure de bombage après le pressage de la feuille, puis un cadre de refroidissement est placé sous la feuille encore en contact avec la forme supérieure de bombage, puis la force pneumatique retenant la feuille bombée contre la forme supérieure de bombage est stoppée, puis la feuille est recueillie par le cadre de refroidissement, puis le cadre de refroidissement entraîne la feuille bombée dans une zone de refroidissement.

## Patentansprüche

1. Vorrichtung zum Biegen von Glasscheiben, umfassend Förderrollen (30), die die Glasscheiben (20) hintereinander in einer Längsrichtung befördern und sie nacheinander unter eine obere Biegeform (21) und auf eine Aufnahmefläche (22) bringen, die durch die obere Ebene der Rollen unter der oberen Biegeform gebildet wird, **dadurch gekennzeichnet, dass** sie einen Zwischenträger (24) umfasst, der eine Kontaktbahn zum Abstützen der Scheibe umfasst, die sich unter der oberen Biegeform der zu pressenden Scheibe befindet, wobei die Kontaktbahn eben ist oder parallel zum Rand der zu pressenden Scheibe eine Krümmung aufweist, die weniger ausgeprägt ist als diejenige, die durch die obere Form verliehen werden soll, wobei der Zwischenträger bis über die Aufnahmefläche hochfahren und die zu pressende Scheibe bis zum Verlust des Kontakts der Scheibe zu den Rollen abstützen kann, wobei der Zwischenträger unter die Aufnahmefläche (22) absinken kann, wobei ein Pressungsmittel (25) der Scheibe, das von dem Zwischenträger getrennt ist, den Umfang der Scheibe gegen die obere Biegeform pressen kann, wobei der Zwischenträger (24) in einer Kontaktzone mit der zu pressenden Scheibe in Kontakt kommt, wobei sich die Kontaktzone vollständig am Umfang der Scheibe, zwischen dem Rand und 15 cm vom Rand der Scheibe, befindet.

2. Vorrichtung nach dem vorstehenden Anspruch, **dadurch gekennzeichnet, dass** der Zwischenträger (24) mit der zu pressenden Scheibe (20) in einer Kontaktzone in Kontakt kommt, wobei die Kontaktzone vollständig am Umfang der Scheibe, zwischen dem Rand und 7 cm vom Rand der Scheibe und besonders bevorzugt zwischen dem Rand und 3 cm vom Rand der Scheibe vorliegt.

3. Vorrichtung nach einem der vorstehenden Ansprüche, **dadurch gekennzeichnet, dass** sie einen Biegerahmen (25) umfasst, der eine Kontaktbahn zum Abstützen der zu pressenden Scheibe umfasst, wobei die Kontaktbahn eine stärker ausgeprägte Krümmung als diejenige des Zwischenträgers in einer Richtung parallel zum Rand der Scheibe aufweist, wobei der Zwischenträger und der Biegerahmen sich vertikal ineinander bewegen können, wobei der Biegerahmen hochfahren und mit dem Umfang der zu pressenden Scheibe in Kontakt kommen kann.

4. Vorrichtung nach dem vorstehenden Anspruch, **dadurch gekennzeichnet, dass** das Pressungsmittel den Biegerahmen umfasst, dessen Kontaktbahn eine Form aufweist, die komplementär zu derjenigen der oberen Biegeform ist, wobei der Biegerahmen (25) die zu pressende Scheibe gegen die obere Biegeform (21) pressen kann.

5. Vorrichtung nach einem der zwei vorstehenden Ansprüche, **dadurch gekennzeichnet, dass** sich der Zwischenträger, von oben gesehen, innerhalb des Biegerahmens befindet.

6. Vorrichtung nach einem der Ansprüche 3 bis 5, **dadurch gekennzeichnet, dass** der Biegerahmen über die Aufnahmefläche (22) hochfahren kann, um die zu pressende Scheibe zu übernehmen, und unter die Aufnahmefläche absinken kann.

7. Vorrichtung nach Anspruch 2, **dadurch gekennzeichnet, dass** das Pressungsmittel (25) einen Biegerahmen umfasst, dessen Kontaktbahn eine zu derjenigen der oberen Biegeform (21) komplementäre Form aufweist, wobei der Biegerahmen bis über die Aufnahmefläche (22) hochfahren und die zu pressende Scheibe (20) übernehmen kann, indem er sie ausschließlich an ihrem Umfang berührt und sie gegen die obere Biegeform pressen kann, wobei der Zwischenträger und der Biegerahmen sich vertikal ineinander bewegen können, wobei der Zwischenträger, von oben gesehen, innerhalb des Biegerahmens vorliegt, wobei der Biegerahmen unter die Aufnahmefläche absinken kann.

8. Vorrichtung nach einem der vorstehenden Ansprüche, **dadurch gekennzeichnet, dass** der Zwischenträger (24) über die Aufnahmefläche (22) hochfahren und die zu pressende Scheibe bis zum Verlust des Kontakts der Scheibe zu den Rollen (23) abstützen, anschließend einen Hub in Längsrichtung ausführen kann, um die zu pressende Scheibe unter der oberen Biegeform (21) in optimaler Position zu platzieren.

9. Vorrichtung nach dem vorstehenden Anspruch, **dadurch gekennzeichnet, dass** der Zwischenträger über die Aufnahmefläche hochfahren und die zu pressende Scheibe bis zum Verlust des Kontakts der Scheibe zu den Rollen abstützen, anschließend einen Hub in Längsrichtung und einen Hub in Querrichtung ausführen kann, um die zu pressende Scheibe unter der oberen Biegeform in optimaler Position zu platzieren.

10. Vorrichtung nach dem vorstehenden Anspruch, **dadurch gekennzeichnet, dass** der Hub in Längsrichtung und der Hub in Querrichtung mindestens teilweise simultan erfolgen.

11. Vorrichtung nach einem der vorstehenden Ansprüche, **dadurch gekennzeichnet, dass** die optimale Position der zu pressenden Scheibe unter der oberen Biegeform durch den Kontakt der Kante der zu pressenden Scheibe gegen mindestens einen Anschlag (26) bestimmt wird, der den Hub der zu pressenden Scheibe in Längsrichtung stoppt.

12. Vorrichtung nach einem der vorstehenden Ansprüche, **dadurch gekennzeichnet, dass** sie ein pneumatisches Mittel umfasst, das erlaubt, die gebogene Scheibe gegen die obere Biegeform zu halten, wobei das pneumatische Mittel insbesondere ein Saugmittel ist, mit dem die obere Biegeform ausgestattet ist, wobei dieses Öffnungen umfasst, die auf seiner Kontaktfläche mit der zu pressenden Scheibe platziert sind, oder eine es umgebende Einfassung umfasst.

13. Vorrichtung nach einem der vorstehenden Ansprüche, **dadurch gekennzeichnet, dass** der Zwischenträger eben ist.

14. Vorrichtung nach einem der vorstehenden Ansprüche, **dadurch gekennzeichnet, dass** die Kontaktbahn des Zwischenträgers eine Breite im Bereich zwischen 5 und 20 mm aufweist.

15. Verfahren zum Biegen von Glasscheiben mit der Vorrichtung eines der vorstehenden Ansprüche, **dadurch gekennzeichnet, dass** die zu pressende Scheibe (20) durch die Förderrollen (30, 23) auf die Aufnahmefläche (22) unter der oberen Biegeform (21) gebracht wird, anschließend der Zwischenträger über die Aufnahmefläche hochfährt und die zu pressende Scheibe bis zum Verlust des Kontakts der Scheibe zu den Rollen abstützt, wobei das Pressungsmittel (25) die Scheibe anschließend gegen die obere Biegeform presst.

16. Verfahren nach dem vorstehenden Anspruch, **dadurch gekennzeichnet, dass** die Vorrichtung einen Biegerahmen (25) umfasst, der eine Kontaktbahn zur Kontaktaufnahme mit der zu pressenden Scheibe umfasst, wobei die Kontaktbahn parallel zum Rand der Scheibe eine stärker ausgeprägte Krümmung als diejenige des Zwischenträgers aufweist, wobei der Zwischenträger und der Biegerahmen sich vertikal ineinander bewegen können, wobei der Biegerahmen hochfährt und mit dem Umfang der zu pressenden Scheibe in Kontakt kommt.

17. Verfahren nach dem vorstehenden Anspruch, **dadurch gekennzeichnet, dass** das Pressungsmittel (25) den Biegerahmen umfasst, dessen Kontaktbahn eine Form aufweist, die komplementär zu der der oberen Biegeform ist, und dadurch, dass, nachdem der Zwischenträger (24) die zu pressende Scheibe abstützt, der Biegerahmen (25) den Umfang der zu pressenden Scheibe gegen die obere Biegeform (21) presst.

18. Verfahren nach dem vorstehenden Anspruch, **dadurch gekennzeichnet, dass** der Zwischenträger und der Biegerahmen mit der zu pressenden Scheibe ausschließlich an ihrem Umfang in Kontakt kommen, wobei der Zwischenträger, von oben gesehen, im Inneren des Biegerahmens vorliegt, wobei sich der Biegerahmen vor seinem Hochfahren unter der Aufnahmefläche befindet und nach der Pressung unter die Aufnahmefläche zurückkehrt.

19. Verfahren nach einem der vorstehenden Verfahrensansprüche, **dadurch gekennzeichnet, dass** der Zwischenträger, der die zu pressende Scheibe stützt, einen Hub in Längsrichtung bis zur optimalen Positionierung der zu pressende Scheibe unter der oberen Biegeform ausführt.

20. Verfahren nach dem vorstehenden Anspruch, **dadurch gekennzeichnet, dass** der Zwischenträger, der die zu pressende Scheibe stützt, bis zur optimalen Positionierung der zu pressenden Scheibe unter der oberen Biegeform einen Hub in Längsrichtung und einen Hub in Querrichtung ausführt.

21. Verfahren nach einem der vorstehenden Verfahrensansprüche, **dadurch gekennzeichnet, dass** die optimale Position der zu pressenden Scheibe unter der oberen Biegeform durch den Kontakt der Kante der zu pressenden Scheibe gegen mindestens einen Positionsanschlag (26) bestimmt wird, der ihren Hub in Längsrichtung stoppt.

22. Verfahren nach einem der vorstehenden Verfahrensansprüche, **dadurch gekennzeichnet, dass** die zu pressende Scheibe eine Emailleschicht trägt, und dadurch, dass der Zwischenträger mit der zu pressenden Scheibe in einer durch die Emaille getrübten Zone in Kontakt kommt.

23. Verfahren nach dem vorstehenden Anspruch, **dadurch gekennzeichnet, dass** der Zwischenträger hochfährt und die zu pressende Scheibe abstützt, während die Rollen noch nicht angehalten worden sind.

24. Verfahren nach einem der vorstehenden Verfahrensansprüche, **dadurch gekennzeichnet, dass** die Vorrichtung ein pneumatisches Mittel umfasst, das eine pneumatische Kraft ausüben kann, die erlaubt, die gebogene Scheibe gegen die obere Biegeform zu halten, wobei das pneumatische Mittel die gebogene Scheibe nach der Pressung der Scheibe gegen die obere Biegeform hält, wobei anschließend ein Kühlrahmen unter der noch mit der oberen Biegeform in Kontakt stehenden Scheibe platziert wird, wobei anschließend die pneumatische Kraft, die die gebogene Scheibe gegen die obere Biegeform hält, gestoppt wird, wobei anschließend die Scheibe von dem Kühlrahmen gesammelt wird, wobei anschließend der Kühlrahmen die gebogene Scheibe in eine Kühlzone führt.

## Claims

1. A device for bending sheets of glass, comprising conveying rollers (30) that convey the sheets of glass (20) one after another in a longitudinal direction, carrying them one after another under an upper bending die (21) and onto a receiving surface (22) formed by the upper level of the rollers under the upper bending die, **characterized in that** it comprises an intermediate support (24) comprising a contact path for supporting the sheet lying under the upper bending die, referred to as the sheet that is to be pressed, said contact path being flat or having, parallel to the edge of the sheet that is to be pressed, a curvature that is less accentuated than the curvature that is to be imparted by the upper die, said intermediate support being able to rise above the receiving surface and support the sheet that is to be pressed until the sheet breaks contact with the rollers, said intermediate support being able to be lowered down below the receiving surface (22), a sheet-pressing means (25) of the sheet distinct from the intermediate support being able to press the periphery of the sheet against the upper bending die, the intermediate support (24) coming into contact with the sheet that is to be pressed at a contact zone, said contact zone being wholly at the periphery of the sheet, between the edge and 15 cm from the edge of the sheet.

2. The device as claimed in preceding claim, **characterized in that** the intermediate (24) support comes into contact with the sheet (20) that is to be pressed at a contact zone, said contact zone being wholly at the periphery of the sheet, between the edge and 7 cm from the edge of the sheet, and more preferably still between the edge and 3 cm from the edge of the sheet.

3. The device as claimed in one of the preceding claims, **characterized in that** it comprises a bending ring (25) comprising a contact path for supporting the sheet that is to be pressed, said contact path having a curvature that is more accentuated than the curvature of the intermediate support in a direction parallel to the edge of the sheet, said intermediate support and said bending ring being able to move vertically one inside the other, said bending ring being able to rise and come into contact with the periphery of the sheet that is to be pressed.

4. The device as claimed in the preceding claim, **characterized in that** the pressing means comprises the bending ring the contact path of which has a shape that complements that of the upper bending die, the bending ring (25) being able to press the sheet that is to be pressed against the upper bending die (21).

5. The device as claimed in one of the two preceding claims, **characterized in that**, when viewed from above, the intermediate support is on the inside of the bending ring.

6. The device as claimed in one of claims 3 to 5, **characterized in that** the bending ring can rise above the receiving surface (22) in order to pick up the sheet that is to be pressed, and can be lowered down below the receiving surface.

7. The device as claimed in claim 2, **characterized in that** the pressing means (25) comprises a bending ring the contact path of which has a shape that complements that of the upper bending die (21), the bending ring being able to rise above the receiving surface (22) and pick up the sheet (20) that is to be pressed by contacting it exclusively at its periphery and being able to press it against the upper bending die, said intermediate support and said bending ring being able to move vertically one inside the other, when viewed from above, the intermediate support being on the inside of the bending ring, the bending ring being able to be lowered below the receiving surface.

8. The device as claimed in one of the preceding claims, **characterized in that** the intermediate support (24) can rise above the receiving surface (22) and support the sheet that is to be pressed until the sheet breaks contact with the rollers (23), then effect a travel in the longitudinal direction in order to place the sheet that is to be pressed in the optimal position under the upper bending die (21).

9. The device as claimed in the preceding claim, **characterized in that** the intermediate support can rise above the receiving surface and support the sheet that is to be pressed until the sheet breaks contact with the rollers, then effect a travel in the longitudinal direction and a travel in the lateral direction in order to place the sheet that is to be pressed in the optimal position under the upper bending die.

10. The device as claimed in the preceding claim, **characterized in that** the travel in the longitudinal direction and the travel in the lateral direction take place at least partially simultaneously.

11. The device as claimed in one of the preceding claims, **characterized in that** the optimal position of the sheet that is to be pressed under the upper bending die is determined by contact of the edge face of the sheet that is to be pressed against at least one stop (26) that halts the travel of the sheet that is to be pressed in the longitudinal direction.

12. The device as claimed in one of the preceding claims, **characterized in that** it comprises a pneumatic means allowing the bent sheet to be held against the upper bending die, the pneumatic means being in particular a suction means with which the upper bending die is equipped, this die comprising orifices positioned on its face that contacts the sheet that is to be pressed, or comprising a skirt surrounding same.

13. The device as claimed in one of the preceding claims, **characterized in that** the intermediate support is flat.

14. The device as claimed in one of the preceding claims, **characterized in that** the contact path of the intermediate support has a width of between 5 and 20 mm.

15. A method for bending sheets of glass using the device of one of the preceding claims, **characterized in that** the sheet (20) that is to be pressed is brought by the conveying rollers (30, 23) on the receiving surface (22) under the upper bending die (21), then the intermediate support rises above the receiving surface and comes to support the sheet that is to be pressed until the sheet breaks contact with the rollers, then the pressing means (25) presses the sheet against the upper bending die.

16. The method as claimed in the preceding claim, **characterized in that** the device comprises a bending ring (25) comprising a contact path for coming into contact with the sheet that is to be pressed, said contact path having, parallel to the edge of the sheet, a curvature that is more accentuated than the curvature of the intermediate support, said intermediate support and said bending ring being able to move vertically one inside the other, said bending ring rising and coming into contact with the periphery of the sheet that is to be pressed.

17. The method as claimed in the preceding claim, **characterized in that** the pressing means (25) comprises the bending ring the contact path of which has a shape that complements that of the upper bending die, and **in that** after the intermediate support (24) has supported the sheet that is to be pressed, the bending ring (25) presses the periphery of the sheet that is to be pressed against the upper bending die (21).

18. The method as claimed in the preceding claim, **characterized in that** the intermediate support and the bending ring come into contact with the sheet that is to be pressed exclusively at the periphery thereof, the intermediate support being, when viewed from above, on the inside of the bending ring, the bending ring lying below the receiving surface before it rises and returning back to below the receiving surface after pressing.

19. The method as claimed in one of the preceding method claims, **characterized in that** the intermediate support supporting the sheet that is to be pressed effects a travel in the longitudinal direction until the sheet that is to be pressed is optimally positioned under the upper bending die.

20. The method as claimed in the preceding claim, **characterized in that** the intermediate support supporting the sheet that is to be pressed effects a travel in the longitudinal direction and a travel in the lateral direction until the sheet that is to be pressed is optimally positioned under the upper bending die.

21. The method as claimed in one of the preceding method claims, **characterized in that** the optimal postion of the sheet that is to be pressed under the upper bending die is determined by contact of the edge face of the sheet that is to be pressed against at least one position stop (26) that halts its travel in the longitudinal direction.

22. The method as claimed in one of the preceding method claims, **characterized in that** the sheet that is to be pressed bears a layer of enamel and **in that** the intermediate support comes into contact with the sheet that is to be pressed in a zone that is rendered opaque by the enamel.

23. The method as claimed in the preceding claim, **characterized in that** the intermediate support rises and comes to support the sheet that is to be pressed when the rollers have not yet stopped.

24. The method as claimed in one of the preceding method claims, **characterized in that** the device comprises a pneumatic means able to apply a pneumatic force that holds the bent sheet against the upper bending die, said pneumatic means holding the bent sheet against the upper bending die after the sheet has been pressed, then a cooling ring is positioned under the sheet still in contact with the upper bending die, then the pneumatic force holding the bent sheet against the upper bending die is halted, then the sheet is collected by the cooling ring, then the cooling ring takes the bent sheet into a cooling zone.
